# FASCICULE DE BREVET EUROPEEN

(11) **EP 0 371 867 B1**
(45) Date de publication et mention de la délivrance du brevet: **03.11.1993**
(21) Numéro de dépôt: 89403276.2
(22) Date de dépôt: 27.11.1989
(51) Int. Cl.: B64G 1/40, F16L 55/10

(54) **Dispositif de remplissage des propulseurs cryogéniques d'un lanceur, à séparation automatique lors du décollage**
Füllanschluss für kryogene Treibstoffe von Raketen mit automatischer Trennung beim Start
Filling device for cryogenic rocket fuel, automatically separated at launching

(30) Priorité: 29.11.1988 FR 8815580
(43) Date de publication de la demande: 06.06.1990
(73) Titulaire: AEROSPATIALE Société Nationale Industrielle, 75781 Paris Cédex 16 (FR)
(72) Inventeur: Landat, Jacques, F-78250 Oinville (FR)
(74) Mandataire: Mongrédien, André

(56) Documents cités:
- WO-A-86/01577
- DE-A- 1 217 162
- DE-U- 8 705 099

## Description

L'invention concerne un dispositif permettant de remplir en ergols les propulseurs cryogéniques d'un lanceur et permettant d'effectuer la rupture de la tuyauterie de remplissage au moment du décollage.

Le remplissage de l'étage cryogénique d'un lanceur doit être réalisé juste avant le lancement. En particulier, il est important que ce remplissage se poursuive jusqu'au moment du décollage. Cette exigence conduit à des difficultés techniques importantes, car la rupture de la canalisation reliant le sol au lanceur doit se faire précisément au moment du lancement et sans aucune conséquence sur la trajectoire du lanceur ou sur les installations au sol et embarquées sur le lanceur.

Les techniques de remplissage des propulseurs cryogéniques connues peuvent être classées en deux catégories, selon que ce remplissage s'effectue par la partie avant ou par la partie arrière des propulseurs.

Dans la première catégorie, c'est-à-dire lorsque le remplissage s'effectue par la partie avant des propulseurs, on utilise habituellement des bras, dits bras cryogéniques, qui sont équipés de plaques à clapets. Cependant, le dégagement de ces bras au moment du lancement est toujours une opération délicate. En particulier, un dégagement trop tardif du bras risque, sinon de déséquilibrer le lanceur, tout au moins d'arracher le dispositif de remplissage, créant ainsi des dégats importants aux installations au sol et sur le lanceur.

Pour cette raison, la technique consistant à remplir les propulseurs cryogéniques par l'arrière de ces propulseurs est généralement préférée.

Parmi les différents dispositifs existants utilisés dans cette seconde technique, on citera notamment un dispositif à joint, dans lequel l'étanchéité est réalisée au moyen d'un joint situé entre la buse d'arrivée des ergols et la plaque embarquée sur le lanceur, au niveau de la canalisation de remplissage du propulseur. Ce dispositif est équipé d'un verrouillage mécanique à billes qui nécessite, en plus d'un système de déverrouillage initial, un système de sécurité ou de secours. Par conséquent, ce dispositif de remplissage connu est très complexe, nécessite une mécanique de grande précision et il est donc très onéreux. De plus, la fiabilité de ce dispositif, évaluée à 10⁻⁵, est incompatible avec la fiabilité requise pour les lanceurs développés actuellement qui est de 10⁻⁸.

Dans le cadre de la technique d'alimentation des propulseurs cryogéniques par l'arrière, l'invention a précisément pour objet un dispositif de remplissage d'un type nouveau, de conception beaucoup plus simple et par conséquent beaucoup plus fiable que les dispositifs connus et dont le coût est très réduit par rapport à ces derniers.

Le document DE-A-1 217 162 montre un dispositif selon la préambule de la revendication 1 qui est apte à être utilisé pour le remplissage de propulseurs cryogéniques d'un lanceur.

Conformément à l'invention, ce résultat est obtenu au moyen d'un dispositif de remplissage de propulseurs cryogéniques d'un lanceur, à séparation automatique lors du décollage de ce dernier, comprenant un tube de remplissage présentant une zone fragilisée, caractérisé par le fait qu'il comprend de plus :
- un mécanisme prenant appui sur le tube de remplissage de part et d'autre de la zone fragilisée, ce mécanisme étant sensible à un déplacement du lanceur en éloignement du sol pour commander automatiquement l'application sur le tube d'un effort de traction entraînant sa rupture dans la zone fragilisée, tors du décollage du lanceur.

Selon un mode de réalisation préféré de l'invention, le mécanisme comprend un système de jambes de force articulées sur le tube de remplissage de part et d'autre de la zone fragilisée, et une surface d'appui fixe par rapport au sol et sur laquelle est en appui le système de jambes de force, cette surface étant telle qu'un déplacement du tube de remplissage provoqué par le décollage du lanceur a pour effet d'appliquer ledit effort de traction sur le tube, par l'intermédiaire du système de jambes de force.

De façon plus précise, le système de jambes de force comprend au moins trois ensembles régulièrement répartis autour du tube de remplissage, chacun de ces ensembles comprenant deux biellettes dont deux extrémités adjacentes sont articulées l'une sur l'autre autour d'un axe d'articulation commun, et dont les extrémités opposées prennent appui sur des axes d'ancrage liés au tube de part et d'autre de la zone fragilisée, l'axe d'articulation commun de chaque ensemble de biellettes étant normalement plus éloigné du tube de remplissage que les axes d'ancrage, de telle sorte que l'une au moins des biellettes est en contact avec ladite surface d'appui à proximité dudit axe d'articulation commun.

Dans ce même mode de réalisation, la surface d'appui fixe est formée à l'intérieur d'un manchon disposé coaxialement autour du tube de remplissage et fixé sur une structure stationnaire par rapport au sol, la surface d'appui fixe étant avantageusement une surface tronconique dont les extrémités de relativement petit et grand diamètres sont tournées respectivement vers le sol et vers le lanceur.

Un mode de réalisation préféré de l'invention va à présent être décrit, à titre d'exemple non limitatif, en se référant aux dessins annexés, dans lesquels :
- la figure 1 est une vue en coupe longitudinale illustrant une première étape de mise en place d'un tube de remplissage présentant une zone fragilisée conformément à l'invention, lors du raccordement des canalisations d'alimentation en ergols des propulseurs cryogéniques d'un lanceur ;
- la figure 2 est une vue en coupe selon la ligne II-II de la figure 1 ;
- la figure 3 est une vue en coupe longitudinale comparable à la figure 1 illustrant, au cours d'une étape suivante de la préparation au lancement d'un lanceur, la mise en place du manchon entourant le tube de remplissage du dispositif selon l'invention ;
- la figure 4 est une vue en coupe longitudinale comparable aux figures 1 et 3 illustrant l'étape de préparation suivante du dispositif, au cours de laquelle l'obturateur à volets est mis en place à l'extrémité du manchon ; et
- la figure 5 illustre, en coupe longitudinale, la position occupée par les différentes pièces du dispositif de remplissage selon l'invention, juste après le décollage du lanceur.

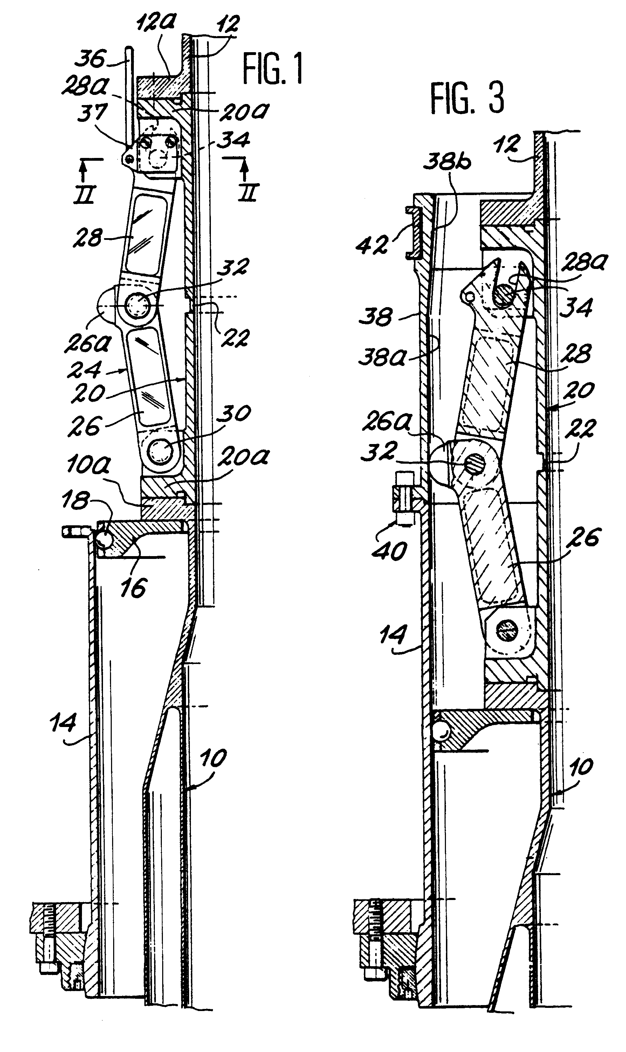

Sur la figure 1, les références 10 et 12 désignent respectivement les extrémités en vis-à-vis d'une canalisation au sol et d'une canalisation embarquée sur le lanceur destinées à assurer l'alimentation en ergols des propulseurs cryogéniques de ce dernier. Ces canalisations 10 et 12 sont placées selon un même axe vertical et leurs extrémités adjacentes comportent chacune une bride désignée respectivement par les références 10a et 12a sur la figure 1.

La canalisation au sol 10 est disposée coaxialement à l'intérieur d'un fourreau 14 qui constitue une structure stationnaire par rapport au sol, à l'intérieur de laquelle la canalisation 10 peut se déplacer axialement. Le guidage et le centrage de l'extrémité supérieure de la canalisation 10 à l'intérieur du fourreau 14 sont assurés par une couronne 16 fixée sur la bride 10a et dont la périphérie extérieure comporte des logements dans lesquels sont emprisonnées des billes 18 roulant sur la surface intérieure du fourreau 14. Dans la position de préparation au lancement illustrée sur la figure 1, la bride 10a formée à l'extrémité supérieure de la canalisation 10 affleure l'extrémité supérieure du fourreau 14. Dans ces conditions, une partie du dispositif de remplissage selon l'invention peut être placée entre les brides 10a et 12a.

Cette première partie du dispositif de remplissage selon l'invention se compose d'un tronçon de tube 20 comportant une zone fragilisée 22, et d'un système de jambes de force 24 articulées sur le tronçon de tube 20, de part et d'autre de cette zone fragilisée.

De façon plus précise, le tronçon de tube 20 comporte à chacune de ses extrémités une bride 20a apte à être fixée de façon étanche sur les brides 12a et 10a par tout moyen de fixation approprié tel que des boulons (non représentés). Le diamètre intérieur du tronçon de tube 20 est égal au diamètre intérieur des parties adjacentes des canalisations 10 et 12. La zone fragilisée 22, qui est placée au milieu du tronçon de tube 20, est constituée par une zone de moindre épaisseur obtenue en réalisant une gorge annulaire sur la surface extérieure du tronçon.

Par ailleurs, le système de jambes de force 24 comprend quatre ensembles formés chacun de deux biellettes 26 et 28. Ces ensembles sont régulièrement répartis autour du tronçon de tube 20, à 90° les uns des autres, comme l'illustre la figure 2. Il est à noter que le nombre des ensembles de deux biellettes 26 et 28 peut être différent de quatre, à condition que ce nombre soit au moins égal à trois, pour assurer une bonne répartition des efforts axiaux exercés sur le tronçon de tube 20 lors du décollage.

Comme on le voit sur la figure 1, chacune des biellettes 26 est articulée sur le tronçon de tube 20 par un axe d'ancrage 30 orthogonal à l'axe du tronçon de tube et traversant simultanément une chape formée à l'extrémité inférieure de la biellette 26 et une nervure radiale coiffée par cette chape et formée sur le tronçon de tube immédiatement au-dessus de la bride inférieure 20a.

L'extrémité opposée de la biellette 26 est articulée par un axe d'articulation 32 sur l'extrémité inférieure de la biellette 28. A cet effet, l'extrémité supérieure plane de la biellette 26 pénètre dans une chape formée à l'extrémité inférieure de la biellette 28 qui lui correspond. A son extrémité supérieure, chacune des biellettes 28 comporte une fente longitudinale ouverte 28a lui donnant la forme d'une fourche qui vient chevaucher un axe d'ancrage 34 traversant à la fois la fente 28a et une chape formée sur l'extrémité supérieure du tronçon de tube 20, immédiatement en dessous de la bride supérieure 20a.

Lorsque les ensembles de biellettes 26 et 28 occupent une position d'attente dans laquelle le fond des fentes 28a est pratiquement en appui sur les axes d'ancrage 34, l'axe d'articulation 32 est légèrement plus éloigné de l'axe du tronçon de tube 20 que les axes d'ancrage 30 et 34. En d'autres termes, les deux biellettes 26 et 28 sont légèrement repliées vers l'extérieur, de telle sorte que l'application d'un effort orienté radialement vers l'intérieur sur chaque ensemble de biellette 26 et 28, au niveau de l'axe d'articulation 32, a pour conséquence d'écarter l'extrémité supérieure de la biellette 28 de l'extrémité inférieure de la biellette 26.

Comme le montre également la figure 1, chacune des biellettes 26 comporte à son extrémité supérieure et sur son bord extérieur par rapport au tronçon de tube 20 une protubérance semi-circulaire 26a dont la fonction apparaîtra ultérieurement.

Dans la position illustrée sur les figures 1 et 2, qui correspond au montage du tronçon de tube 20 portant le système de jambes de force 26 entre les tuyauteries 10 et 12, un mécanisme de blocage est prévu entre l'extrémité supérieure de chacune des biellettes 28 et l'extrémité supérieure du tronçon de tube 20 pour éviter que chacune des paires de biellettes 26 et 28 ne s'échappe de l'axe d'ancrage 34.

Dans l'exemple de réalisation représenté, ce mécanisme de blocage est constitué par une broche de maintien 36 pour chacune des paires de biellettes. Plus précisément, chacune des broches de maintien 36 traverse simultanément un trou formé dans l'extrémité supérieure de la biellette 28 et un trou formé dans une plaque 37 fixée par exemple par des vis sur la chape formée à ce niveau sur le tronçon de tube 20, comme le montre la figure 2.

Lorsque l'ensemble formé par le tronçon de tube 20 et par le système de jambes de force 24 est monté entre les tuyauteries 10 et 12, ces dernières ainsi que le tronçon de tube 20 qui les relie sont descendus d'une distance déterminée, afin d'amener les protubérances 26a juste au-dessus de l'extrémité supérieure du fourreau 14, comme l'illustre la figure 3.

Dans ces conditions, un autre élément du dispositif selon l'invention est mis en place. Cet élément est constitué par un manchon 38 qui est fixé coaxialement dans le prolongement du fourreau 14, par exemple au moyen de boulons 40 traversant des brides adjacentes formées respectivement sur le fourreau et sur le manchon. Pour permettre son montage, le manchon 38 est réalisé sous la forme de deux demi-manchons de section semi-circulaire maintenus l'un contre l'autre à leurs extrémités supérieures par un collier 42.

La surface intérieure du manchon 38 définit une surface d'appui fixe par rapport au sol, sur laquelle peuvent glisser les protubérances 26a formées sur chacune des biellettes inférieures 26. Dans sa partie inférieure, cette surface d'appui comporte une partie cylindrique 38a dont le diamètre est identique au diamètre intérieur du fourreau 14. Lorsque le manchon 38 est mis en place, les protubérances 26a se trouvent en contact avec la partie inférieure de cette partie cylindrique 38a de la surface d'appui, de telle sorte que chaque ensemble de biellettes 26 et 28 est maintenu dans la position d'attente légèrement repliée vers l'extérieur définie précédemment en se référant à la figure 1. Les broches 36 peuvent alors être démontées.

Dans sa partie supérieure, la surface d'appui formée à l'intérieur du manchon 38 comporte une partie tronconique 38b dont le diamètre diminue du bas vers le haut à partir de la partie cylindrique 38a.

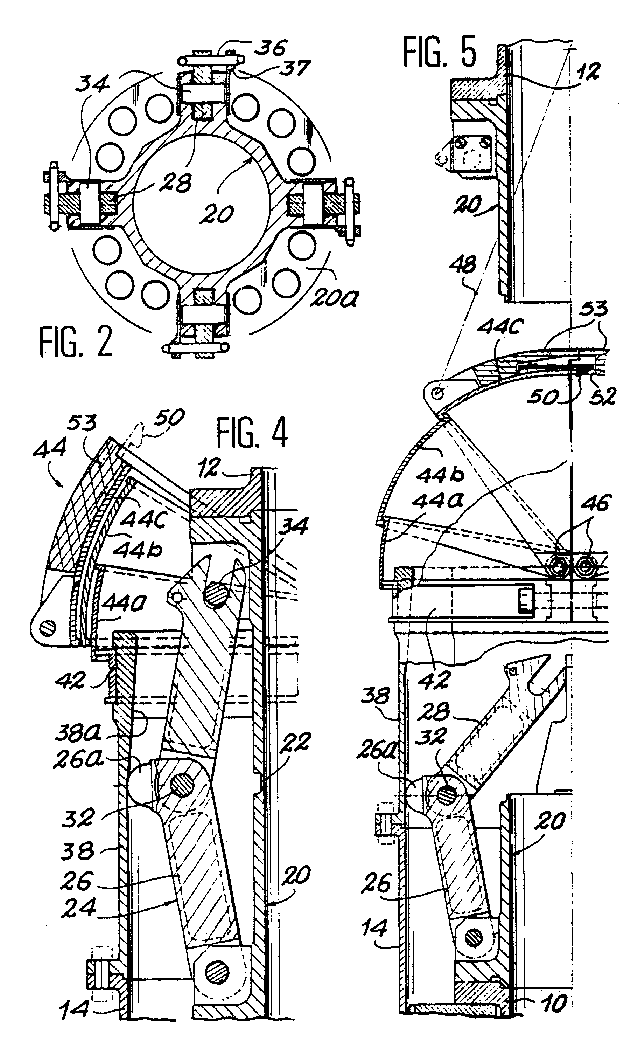

Lorsque le montage du manchon 38 est terminé, l'ensemble formé par les canalisations 10 et 12 et le tronçon de tube 20 qui les relie est remonté à l'intérieur du fourreau 14 et du manchon 38 jusqu'à une position illustrée sur la figure 4, dans laquelle les protubérances 26a se trouvent situées précisément à la jonction entre les parties cylindrique 38a et tronconique 38b de la surface d'appui formée à l'intérieur du manchon 38. Cette position définit la position d'attente dans laquelle se trouvent les différentes pièces juste avant le lancement du lanceur.

Dans cette position et comme l'illustre également la figure 4, on monte à l'extrémité supérieure du manchon 38 un obturateur 44 constitué de plusieurs volets 44a, 44b, 44c articulés sur le manchon 38 autour de deux axes 46 (figure 5) voisins de l'axe vertical commun à ce manchon et au tronçon de tube 20.

Plus précisément, l'obturateur 44 est formé de deux séries de trois volets 44a, 44b et 44c qui présentent lorsqu'ils sont déployés comme l'illustre la figure 5 une forme hémisphérique. Les deux volets 44a sont fixés sur la bague 42 entourant l'extrémité supérieure du manchon 38, alors que les deux volets 44c sont reliés à une pièce d'ancrage (non représentée) du lanceur par des câbles de liaison représentés schématiquement en 48 sur la figure 5, aptes à se rompre au moment du décollage. Les volets adjacents 44a, 44b et 44c sont munis de rebords repliés aptes à venir en appui les uns sur les autres pour assurer le déploiement complet de l'obturateur (figure 5) lorsque les volets 44c sont tirés vers le haut par les câbles 48, au moment du décollage.

Les bords supérieurs des volets 44c sont munis respectivement d'un loquet 50 et d'une encoche 52 constituant un verrou assurant la fermeture automatique de l'obturateur 44 en position déployée.

En outre, les volets supérieurs 44c sont équipés extérieurement d'un calorifugeage 53 protégeant la tuyauterie d'arrivée d'ergols 10 au moment du lancement.

Dans ces conditions, lorsque le décollage du lanceur intervient, l'ensemble formé par les canalisations 10 et 12 et par le tronçon de tube 20 qui les relie est entraîné vers le haut avec le lanceur, ce qui a pour effet de faire glisser les protubérances 26a le long de la partie tronconique 38a de la surface d'appui formée à l'intérieur du manchon 38, qui reste immobile par rapport au sol. Une force orientée radialement vers l'intérieur est ainsi appliquée au niveau des axes d'articulation 32 sur chacune des paires de biellettes 26 et 28. Cette force a pour effet d'augmenter la distance séparant les extrémités des biellettes, de sorte qu'un effort de traction est exercé par chacune des paires de biellettes sur le tronçon de tube 20, entre les axes d'ancrage 30 et 34. Sous l'effet de cet effort, la zone fragilisée 22 du tronçon de tube 20 se rompt, de telle sorte que la partie supérieure du tronçon de tube 20 fixé à la tuyauterie 12 du lanceur se sépare de la partie inférieure de ce tronçon de tube, fixé à la tuyauterie au sol 10 et sur laquelle restent articulées les paires de biellettes 26 et 28. Cette situation est représentée sur la figure 5.

Simultanément, les organes de liaison 48 qui relient le lanceur à l'obturateur 44 commandent automatiquement la fermeture de ce dernier, qui se trouve verrouillé dans cette position par le verrou 50, 52.

Grâce au dispositif de remplissage à séparation automatique qui vient d'être décrit en se référant aux figures 1 à 5, le remplissage en ergols des propulseurs cryogéniques d'un lanceur peut être réalisé au travers des tuyauteries 10 et 12 reliées de façon étanche par le tronçon de tube 20, jusqu'au moment du décollage du lanceur. L'utilisation d'un tube de remplissage présentant une zone fragilisée permet de commander la rupture automatique de cette zone au moment du décollage par des moyens entièrement mécaniques et particulièrement simples formés dans l'exemple de réalisation préféré décrit par le système de jambes de force 24 associé à la surface d'appui fixe formée à l'intérieur du manchon 38 entourant ce système.

La description qui précède fait également apparaître que le dispositif selon l'invention présente un faible encombrement et peut être monté de façon très simple sans nécessiter une grande précision, puisque la surface tronconique 38a permet de rattraper tous les jeux existant éventuellement entre les paires de biellettes et le manchon avant le lancement.

Par ailleurs, il est important d'observer que l'effort d'arrachement qui doit être appliqué sur le tube est relativement réduit, ce qui permet d'éviter d'endommager les installations au sol ou sur le lanceur. Enfin, la fiabilité de ce dispositif est supérieure à celle des dispositifs connus et répond aux exigences requises pour les lanceurs étudiés actuellement, qui réclament une fiabilité de 10⁻⁸.

D'autre part, l'existence de l'obturateur à volets 44 permet de fermer automatiquement et de protéger la tuyauterie d'arrivée d'ergols située au sol, lors du lancement.

Bien entendu, l'invention n'est pas limitée au mode de réalisation qui vient d'être décrit à titre d'exemple, mais s'étend à toutes les variantes telles que revendiquées. En premier lieu, on comprendra que le système de jambes de force articulées associé à la surface d'appui fixe formée à l'intérieur du manchon 38 peut être remplacé par tout mécanisme équivalent permettant d'exercer automatiquement entre les extrémités opposées du tronçon de tube un effort de traction permettant de sectionner celui-ci automatiquement au niveau de la zone fragilisée, lors du décollage du lanceur. Par ailleurs, dans le cas de l'utilisation d'un système de jambes de force articulées du type décrit précédemment, le manchon 38 peut être remplacé par des pièces d'appui multiples placées en face de chacune des paires de biellettes.

## Revendications

1. Dispositif de remplissage de propulseurs cryogéniques d'un lanceur, à séparation automatique lors du décollage de ce dernier, comprenant un tube de remplissage (20) présentant une zone fragilisée (22) caractérisé par le fait qu'il comprend de plus :
- un mécanisme (24) prenant appui sur le tube de remplissage de part et d'autre de la zone fragilisée, ce mécanisme étant sensible à un déplacement du lanceur en éloignement du sol pour commander automatiquement l'application sur le tube d'un effort de traction entraînant sa rupture dans la zone fragilisée (22), lors du décollage du lanceur.

2. Dispositif selon la revendication 1, caractérisé par le fait que ledit mécanisme comprend un système de jambes de force (24) articulées sur le tube de remplissage (20) de part et d'autre de la zone fragilisée (22), et une surface d'appui (38a,38b) fixe par rapport au sol et sur laquelle est en appui le système de jambes de force, cette surface étant telle qu'un déplacement du tube de remplissage provoqué par le décollage du lanceur a pour effet d'appliquer ledit effort de traction sur le tube, par l'intermédiaire du système de jambes de force (24).

3. Dispositif selon la revendication 2, caractérisé par le fait que le système de jambes de force (24) comprend au moins trois ensembles régulièrement répartis autour du tube de remplissage (20), chacun de ces ensembles comprenant deux biellettes (26,28) dont deux extrémités adjacentes sont articulées l'une sur l'autre autour d'un axe d'articulation commun (32), et dont les extrémités opposées prennent appui sur des axes d'ancrage (30, 34) liées au tube de part et d'autre de la zone fragilisée (22), l'axe d'articulation commun de chaque ensemble de biellettes étant normalement plus éloigné du tube de remplissage que les axes d'ancrage, de telle sorte que l'une (26) au moins des biellettes est en contact avec ladite surface d'appui (38a,38b) à proximité dudit axe d'articulation commun.

4. Dispositif selon la revendication 3, caractérisé par le fait que l'une (26) des biellettes de chaque ensemble est montée pivotante sur un premier (30) des axes d'ancrage et que l'autre biellette (28) comporte, à son extrémité opposée, une fente longitudinale ouverte (28a), dans laquelle est reçu le deuxième axe d'ancrage (34).

5. Dispositif selon la revendication 4, caractérisé par le fait que le premier (30) et le deuxième (34) axes d'ancrage sont liés au tube de remplissage (20) respectivement du côté du sol et du côté du lanceur par rapport à la zone fragilisée (22).

6. Dispositif selon l'une quelconque des revendications 2 à 5, caractérisé par le fait que la surface d'appui fixe (38a,38b) est formée à l'intérieur d'un manchon (38) disposé coaxialement autour du tube de remplissage (20) et fixé sur une structure (14) stationnaire par rapport au sol.

7. Dispositif selon la revendication 6, caractérisé par le fait que la surface d'appui fixe comporte une surface tronconique (38b) dont les extrémités de relativement petit et grand diamètres sont tournées respectivement vers le sol et vers le lanceur.

8. Dispositif selon l'une quelconque des revendications 6 et 7, caractérisé par le fait que l'extrémité du manchon (38) tournée vers le lanceur supporte un obturateur (44) apte à fermer automatiquement le manchon et une partie du tube de remplissage (20) restant au sol, lors du décollage du lanceur.

9. Dispositif selon la revendication 8, caractérisé par le fait que l'obturateur (44) est formé de volets déployables (44a,44b,44c) munis d'un verrou de fermeture automatique (50,52) en position déployée, le déploiement des volets étant commandé par des organes de liaison (48) fixés au lanceur et à ces volets et aptes à se rompre automatiquement lors du décollage.

10. Dispositif selon l'une quelconque des revendications 1 à 9, caractérisé par le fait que le tube de remplissage est un tronçon de tube (20) terminé par des brides (20a) permettant de fixer ce tronçon de façon étanche, respectivement sur une canalisation au sol (10) et sur une canalisation (12) liée au lanceur.

11. Dispositif selon la revendication 10, caractérisé par le fait que la zone fragilisée est une zone de moindre épaisseur (22) placée au milieu du tronçon de tube (20).

## Claims

1. Apparatus for filling cryogenic propellents into a launcher, with automatic separation at the time of launch of the latter, incorporating a filling tube (20) having a weakened zone (22), characterized in that it also comprises a mechanism (24) bearing on the filling tube on either side of the weakened zone, said mechanism being sensitive to a displacement of the launcher on moving away from the ground in order to automatically apply to the tube a tensile stress leading to its fracture in the weakened zone (22) during the lift-off of the launcher.

2. Apparatus according to claim 1, characterized in that the mechanism comprises a system of struts (24) articulated to the filling tube (20) on either side of the weakened zone (22) and a bearing surface (38a, 38b) fixed with respect to the ground and on which bears the strut system, said surface being such that a displacement of the filling tube caused by the lift-off of the launcher has the effect of applying said tensile stress to the tube via the strut system (24).

3. Apparatus according to claim 2, characterized in that the strut system (24) comprises at least three assemblies regularly distributed about the filling tube (20), each of these assemblies having two links (26, 28), whereof two adjacent ends are articulated to one another about a common hinge pin (32) and whose opposite ends bear on anchoring pins (30, 32) connected to the tube on either side of the weakened zone (22), the common hinge pin of each assembly of links being normally further from the filling tube than the anchoring pins, so that at least one (26) of the links is in contact with said bearing surface (38a, 38b) in the vicinity of said common hinge pin.

4. Apparatus according to claim 3, characterized in that one (26) of the links of each assembly is mounted in pivoting manner on a first (30) of the hinge pins and the other link has at its opposite end an open longitudinal slot (28a) in which the second hinge pin (34) is received.

5. Apparatus according to claim 4, characterized in that the first (30) and second (34) hinge pins are connected to the filling tube (20) respectively on the ground side and on the launcher side with respect to the weakened area (22).

6. Apparatus according to any one of the claims 2 to 5, characterized in that the fixed bearing surface (38a, 38b) is formed within a sleeve (38) arranged coaxially around the filling tube (20) and fixed to a structure (14) stationary with respect to the ground.

7. Apparatus according to claim 6, characterized in that the fixed bearing surface has a truncated cone-shaped surface (38), whose relatively small end large diameter ends are turned respectively towards the ground and towards the launcher.

8. Apparatus according to either of the claims 6 and 7, characterized in that the end of the sleeve (38) turned towards the launcher supports a blanking cap (44) able to automatically close the sleeve and part of the filling tube (20) remaining on the ground at the time of launcher lift-off.

9. Apparatus according to claim 8, characterized in that the blanking cap (44) is formed from flaps (44a, 44b, 44c) which can be opened out and which are provided with a lock for automatic closure (50, 52) in the opened out position, the opening out of the flaps being controlled by connecting members (48) fixed to the launcher and to said flaps and which break automatically during lift-off.

10. Apparatus according to any one of the claims 1 to 9, characterized in that the filling tube is a tube section (20) terminated by flanges (20a) making it possible to tightly fix said section respectively to a ground pipe (10) and to a launcher-linked pipe (12).

11. Apparatus according to claim 10, characterized in that the weakened zone is a zone of reduced thickness (22) in the centre of the tube section (20).

## Patentansprüche

1. Füllanschluß für krogene Treibstoffe von Raketen mit automatischer Trennung beim Start der Rakete, umfassend ein Füllrohr (20) mit einer Bruchzone (22), dadurch **gekennzeichnet**, daß er außerdem eine Vorrichtung (24) umfaßt, die auf dem Füllrohr auf beiden Seiten der Bruchzone angeordnet ist, wobei diese Vorrichtung auf eine Entfernung der Rakete vom Boden reagieren kann, um automatisch die Anwendung einer Zugkraft auf das Rohr zu steuern, die dessen Bruch in der Bruchzone (22) beim Abheben der Rakete bewirkt.

2. Füllanschluß nach Anspruch 1, dadurch **gekennzeichnet**, daß die Vorrichtung ein System von Streben (24) umfaßt, die auf dem Füllrohr (20) auf beiden Seiten der Bruchzone (22) gelenkig angeordnet sind, sowie eine Anschlagfläche (38a, 38b) die am Boden befestigt ist und auf die sich das Strebensystem stützt, wobei diese Fläche so angeordnet ist, daß eine Ortsveränderung des Füllrohrs, hervorgerufen durch das Abheben der Rakete das Anwenden derZugkraft auf das Rohr über das Strebensystem (24) bewirkt.

3. Füllanschluß nach Anspruch 2, dadurch **gekennzeiehnet**, daß das Strebensystem (24) mindestens 3 Baugruppen umfaßt, die regelmäßig um das Füllrohr angeordnet sind, wobei jede Baugruppe zwei Knüppel (26 28) umfaßt, von denen zwei benachbarte Enden gelenkig aneinander um eine gemeinsame Gelenkachse (32) verbunden sind, und deren entgegengesetzte Enden auf Verankerungsachsen (30, 34) gelagert sind, die mit dem Rohr auf beiden Seiten der Bruchzone (22) verbunden sind, wobei die gemeinsame Gelenkachse jeder Knüppelbaugruppe normalerweise vom Füllrohr weiter entfernt ist als die Verankerungsachsen, so daß mindestens ein Knüppel (26) die Anschlagoberfläche (38a, 38b) in der Nähe der gemeinsamen Gelenkachse berührt.

4. Füllanschluß nach Anspruch 3, dadurch **gekennzeichnet**, daß einer (26) der Knüppel jeder Baugruppe drehbar um eine erste (30) Verankerungsachse gelagert ist, und der andere Knüppel (28) an seinem entgegengesetzten Ende einen geöffneten Längsschlitz (28a) umfaßt, in den die zweite Verankerungsachse (34) aufgenommen wird.

5. Füllanschluß nach Anspruch 4, dadurch **gekennzeichnet**, daß die erste (30) bzw. zweite (34) Verankerungsachse mit dem Füllrohr (20) bezüglich der Bruchzone (22) auf der Seite des Erdbodens bzw. auf der Seite der Rakete verbunden sind.

6. Füllanschluß nach einem der Ansprüche 2 bis 5, dadurch **gekennzeichnet**, daß die feste Anschlagfläche (38a, 38b) im Inneren einer Hülse (38) ausgebildet ist, die koaxial um das Füllrohr (20) angeordnet und auf einer bezüglich des Bodens festen Struktur (14) befestigt ist.

7. Füllanschluß nach Anspruch 6, dadurch **gekennzeichnet**, daß die feste Anschlagfläche eine Kegelfläche (38b) umfaßt, deren Enden mit kleinem bzw. großem Durchmesser zum Boden bzw. zur Rakete zeigen.

8. Füllanschluß nach einem der Ansprüche 6 und 7, dadurch **gekennzeichnet**, daß das Ende der Hülse (38), welches zur Rakete zeigt, einen Verschluß (44) trägt, der geeignet ist, die Hülse und einen Teil des Füllrohrs (20), der am Boden bleibt, beim Abheben der Rakete automatisch zu verschließen.

9. Vorrichtung nach Anspruch 8, dadurch **gekennzeichnet**, daß der Verschluß (44,) aus entfaltbaren Klappen (44a, 44b, 44c) gebildet ist, welche mit einem Riegel (50, 52) zum automatischen Verschließen in der entfalteten Stellung ausgestattet sind, wobei das Entfalten der Klappen durch Verbindungsmittel (48) gesteuert wird, welche an der Rakete und den Riegeln befestigt sind und beim Abheben automatisch zerbrochen werden können.

10. Füllanschluß nach einem der Ansprüche 1 bis 9, dadurch **gekennzeichnet**, daß das Füllrohr ein Rohrabschnitt (20) ist, welcher in Flanschen (20a) endet, die es erlauben, den Rohrabschnitt bezüglich einer Leitungsverbindung am Boden (10) und einer mit der Rakete verbundenen Leitungsverbindung (12) dicht zu verbinden.

11. Füllanschluß nach Anspruch 10, dadurch **gekennzeichnet**, daß die Bruchzone eine Zone geringerer Dicke (22) ist, welche in der Mitte des Rohrabschnitts (20) angeordnet ist.
